# EUROPÄISCHE PATENTSCHRIFT

(11) **EP 1 978 887 B1**
(45) Veröffentlichungstag und Bekanntmachung des Hinweises auf die Patenterteilung: **16.11.2016**
(21) Anmeldenummer: 07703080.7
(22) Anmeldetag: 26.01.2007
(51) Int. Cl.: A61C 13/00

(54) **IMPLANTAT UND VERFAHREN ZUR HERSTELLUNG EINES IMPLANTATS**
IMPLANT AND METHOD FOR PRODUCING AN IMPLANT
IMPLANT ET PROCÉDÉ DE FABRICATION D'IMPLANT

(30) Priorität: 03.02.2006 DE 102006005034
(43) Veröffentlichungstag der Anmeldung: 15.10.2008
(73) Patentinhaber: Lakeview Innovation Ltd., 6374 Buochs (CH)
(72) Erfinder: ZIMMERMANN, Dirk, 79350 Sexau (DE); FÜTTERER, Bodo, 6005 Luzern (CH)
(74) Vertreter: Grünecker Patent- und Rechtsanwälte PartG mbB
(86) Internationale Anmeldenummer: PCT/EP2007/000704
(87) Internationale Veröffentlichungsnummer: WO 2007/090529

(56) Entgegenhaltungen:
- EP-A- 0 607 017
- EP-A1- 1 491 160
- EP-A1- 1 529 498
- WO-A-2005/115268
- DE-T2- 69 923 270
- DE-U1-202004 020 338
- US-A- 5 251 468
- US-B1- 6 354 836

## Beschreibung

Die Erfindung betrifft ein Verfahren zum Herstellen eines zum Einwachsen in einen Knochen bestimmten Implantats durch Pulverspritzgießen von bindemittelversetztem Metall- und/oder Keramikpulver gemäß dem Oberbegriff des Anspruchs 1. In dem Verfahren zur Herstellung eines gattungsgemäßen Implantats wird dementsprechend durch Spritzgießen zunächst ein Grünling, durch Entfernen des Bindemittels ein Braunling und mindestens einmaliges Sintern das Implantat hergestellt wird.

Die Erfindung betrifft auch ein Implantat gemäß dem Oberbegriff des Anspruchs 8. Versuche, Beschädigungen von Gelenken oder auch Zahnsubstanz durch Einsatz von Implantaten zu beheben sind schon seit langem bekannt. Etwa in der Mitte des 20. Jahrhunderts wurde die Forschung in diesen Bereichen intensiviert, so dass heutzutage beispielsweise der Einsatz eines künstlichen Hüftgelenks zur Routine geworden ist.

Auch bei Totalverlust eines Zahnes wird häufig ein Zahnimplantat empfohlen. Solche Zahnimplantate bestehen üblicherweise aus mehreren Teilen. Ein Implantatkörper wird in den Kiefer eingepflanzt und dort im Knochen verankert. Am Implantatkörper wird ein Implantatpfosten befestigt, auf dem eine Suprakonstruktion, wie beispielsweise eine Krone, angebracht wird.

Bisher wird hauptsächlich Titan als Werkstoff für diese Implantate eingesetzt. Dies liegt daran, dass Titan eine gute Biokompatibilität und gute mechanische Eigenschaften aufweist.

Vor allen Dingen bei Zahnimplantaten ergeben sich durch den Einsatz von Titan allerdings eine Reihe von Nachteilen. So kann es beispielsweise vorkommen, dass das Titanimplantat durch das Zahnfleisch durchschimmert. Bei Zahnfleischrückgang oder Schrumpfung ist ein dunkler Rand zwischen der Krone und dem Zahnfleisch zu erkennen.

Es ist daher auch bekannt, Implantate aus Keramik herzustellen. Dies wird beispielsweise in der US 6,354,836 B1 beschrieben. Keramik hat den Vorteil, eine dem natürlichen Zahn ähnliche, helle Färbung zu haben. Nachteilig an diesen Keramikimplantaten ist allerdings, dass sie in einem aufwändigen Herstellverfahren produziert werden müssen. Zudem weisen Keramikimplantate nach dem Sintern eine sehr harte und glatte Oberfläche auf, die das Einwachsen des Implantats in den Knochen erschwert.

Aus anderen Druckschriften, z.B. der DE 20 2004 020 338 U1, ist daher bekannt, dass die Implantatoberfläche eine bestimmte Rauhigkeit aufweisen sollte. Bei sehr harten und glatten

Keramikoberfläche ist es bisher schwierig, eine raue Oberfläche herzustellen. Wird die Oberfläche einer Vorstufe des Implantats, z.B. der Grünling, mechanisch bearbeitet, so kann die noch fragile Struktur des Grünlings leicht beschädigt werden.

Es ist daher Aufgabe der vorliegenden Erfindung, ein Keramikimplantat, einteilig oder aus mehreren Teilen bestehend, auf einfache Weise mit einer aufgerauten Oberfläche zu versehen, die das Einwachsen des Implantats in den Knochen erleichtert.

Die Aufgabe wird gelöst durch die Merkmale des Anspruchs 1. Erfindungsgemäß ist vorgesehen, dass das Verfahren einen Schritt zur Erhöhung der Oberflächenrauhigkeit des Implantats umfasst, der vor dem abschließenden Sintern zur Herstellung des Implantats aus dem Braunling erfolgt, indem die Oberfläche im Grünling und/oder im Braunling und/oder in einer anderen Vorstufe des Implantats ohne mechanische Belastung des Grünlings und/oder des Braunlings und/oder der anderen Vorstufe des Implantats zumindest teilweise aufgeraut wird, wobei die Oberflächenrauhigkeit durch Aufbringen scharfkantiger Partikel auf die Oberfläche des Grünlings und/oder des Braunlings und/oder der anderen Vorstufe des Implantats erhöht wird, die Partikel aus demselben Material bestehen wie das Implantat und die aufgebrachten Partikel eingebrannt werden.

Die Oberflächenbehandlung ist somit Teil des Herstell-Verfahrens. Es sind keine nachträglichen mechanischen Bearbeitungsschritte, wie z.B. spanabhebende Schritte, an den glatten und harten gesinterten Keramikkörpern notwendig. Zudem ist keinerlei mechanische Belastung des Grundkörpers nötig, Beschädigungen des Grünlings oder Braunlings können somit ausgeschlossen werden. Auf diese Weise wird eine feste Verbindung zwischen dem Grundkörper und den aufgebrachten Partikeln hergestellt. Durch die scharfkantigen Partikel wird die Erzeugung von Knochenabrieb beim Einsetzen des Implantats erleichtert.

In einer bevorzugten Ausgestaltung ist vorgesehen, dass der Grünling und/oder der Braunling und/oder die andere Vorstufe des Implantats mit Bindemittel beschichtet und scharfkantige Partikel auf
die Bindemittelschicht aufgebracht werden. Durch die Bindemittelschicht werden die scharfkantigen Partikel
auf dem Grundkörper fixiert und bilden Vorsprünge aus, die die Oberflächenrauhigkeit erhöhen. Während des abschließenden Sintervorgangs sintern diese Partikel auf dem Implantat auf.

Gemäß einer anderen Verfahrensweise werden die scharfkantigen Partikel mit Bindemittel gemischt und auf
den Grünling und/oder den Braunling und/oder die andere Vorstufe des Implantats aufge bracht. Da Bindemittel und scharfkantige

Partikel gleichzeitig aufgebracht werden, kann ein Verfahrensschritt eingespart werden.

Während des abschließenden Sintervorgangs sintern diese scharfkantigen Partikel auf dem Implantat auf.

In einer bevorzugten Variante werden die scharfkantigen Partikel bzw. die scharfkantige- Partikel-Bindemittel-Mischung auf den bindemittelbeschichteten Grünling und/oder den bindemittelbeschichteteh Braunling und/oder die andere, bindemittelbeschichtete Vorstufe des Implantats bzw. den Grünling und/oder Braunling und/oder die andere Vorstufe des Implantats aufgesprüht. Somit ist eine einfache Beschichtung, auch von komplexeren Geometrien, möglich.

Weiterhin ist es auch möglich, dass der Grünling und/oder der Braunling und/oder die andere Vorstufe des Implantats bzw. der bindemittelmittelbeschichtete Grünling und/oder der bindemittelbeschichtete Braunling und/oder die andere, bindemittelbeschichtete Vorstufe des Implantats mit der scharfkantigePartikel-Bindemittelmischung bzw. den scharfkantigen Partikeln berieselt werden. Die scharfkantigen Partikel werden somit drucklos auf den Grundkörper aufgebracht, wodurch eventuelle Beschädigungen vermieden werden können.

Gemäß einer weiteren Variante werden der Grünling und/oder der Braunling und/oder die andere Vorstufe des Implantats bzw. der bindemittelbeschichtete Grünling und/oder der bindemittelbeschichtete Braunling und/oder die andere, biridemittelbeschichtete Vorstufe des Implantats in die scharfkantige-Partikel-Bindemittel-Mischung bzw. in die scharfkantigen Partikel eingetaucht. Auf diese Weise ist es möglich, eine gleichmäßige Beschichtung des Grundkörpers zu erreichen.

Weiterhin kann vorgesehen werden, dass sich bei dem Implantat um ein Schraubimplantat handelt und die Oberfläche des Implantats in dem Bereich aufgeraut wird, in dem beim Einsetzen des Implantats in den Knochen Reibkontakt zwischen Implantat und Knochen auftritt. Durch die aufgeraute Oberfläche des Implantats wird beim Einschrauben des Implantats in den Knochen Knochen abgerieben. Dieser Knochenabrieb trägt dazu bei, dass das Implantat besser in den Knochen einwächst., Darüber hinaus bezieht sich die Erfindung auch auf ein Implantat aus einem keramischen oder metallischen Sinterwerkstoff mit aufgerauter Oberfläche zum Einwachsen in einen Knochen, bei dem die Oberfläche zumindest teilweise partikelförmige Vorsprünge aufweist. Wie bereits beschrieben, können diese Vorsprünge leicht auf einen Grünling und/oder einen Braunling und/oder eine andere Vorstufe des Implantats vor dem abschließenden Sintern aufgebracht werden und erleichtern das Einwachsen des Implantats in den Knochen.

In einer bevorzugten Ausgestaltung ist vorgesehen, dass die aufgeraute Oberfläche des Implantats eine sandpapierähnliche Struktur hat. Diese sandpapierähnliche Struktur entsteht durch das Herstellverfahren und sorgt dafür, dass beim Einsetzen des Implantats in den Knochen Teile des Knochens abgerieben werden und zu einem verbesserten Einwachsen des Implantats beitragen.

Im Folgenden werden Ausführungsformen der Erfindung anhand einer Zeichnung näher erläutert. Es zeigen:
- Fig. 1: ein im Kiefer verankertes Dentalimplantat,
- Fig. 2: Vergrößerung eines Ausschnitts des Implantats aus Fig. 1.

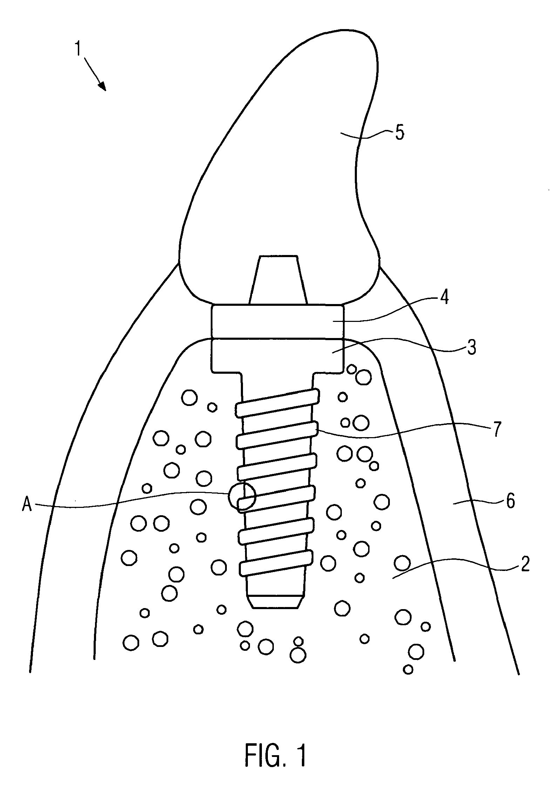

Fig. 1 zeigt einen Querschnitt durch ein im Kieferknochen 2 verankertes Dentalimplantat 1. Das Dentalimplantat 1 besteht aus einem Implantatkörper 3, einem Implantatpfosten 4 und einer Suprakonstruktion 5. Der Implantatkörper 3 wird in eine Bohrung im Kieferknochen 2 eingesetzt und ist somit von außen nicht sichtbar. Auf dem Implantatkörper 3 wird ein Implantatpfosten 4 befestigt. Der Implantatpfosten 4 ist von Zahnfleisch umgeben und somit ebenfalls nicht von außen sichtbar. Der Implantatpfosten 4 weist eine Befestigungsvorrichtung für eine Suprakonstruktion 5, beispielsweise eine Krone oder eine Brücke, auf.

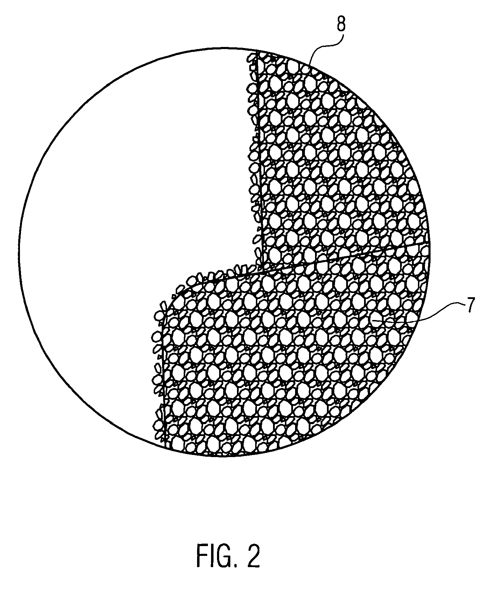

Um den Implantatkörper 3 gut im Kieferknochen 2 verankern zu können, weist der Implantatkörper 3 ein Gewinde 7 auf. Fig. 2 zeigt eine Vergrößerung eines Ausschnitts des Implantatkörpers 3 mit dem Gewinde 7.

Wie in Fig. 2 deutlich zu erkennen ist, weist der Implantatkörper 3 an seiner Oberfläche partikelförmige Vorsprünge 8 auf. Diese partikelförmigen Vorsprünge 8 sind auptsachlich dort angebracht, wo der Implantatkörper 3 beim Einsetzen in den Kieferknochen 2 mit diesem in Reibkontakt tritt, also vor allem an dem Gewinde 7. Beim Einschrauben des Implantatkörpers 3 in den Kieferknochen 2 reiben diese partikelförmigen Vorsprünge 8 am Kieferknochen 2 und führen zu Knochenabrieb. Es hat sich gezeigt, dass dieser Knochenabrieb das Einwachsen des Implantatkörpers 3 in den Kieferknochen 2 erleichtert. Um diesen Knochenabrieb zu fördern, sollten die partikelförmigen Vorsprünge 8 daher möglichst scharfkantig sein. Zudem führen die partikelförmigen Vorsprünge 8 dazu, dass die Oberfläche des Implantatkörpers 3 aufgeraut ist. Der Kieferknochen 2 kann zwischen die partikelförmigen Vorsprünge 8 einwachsen, was zu einer sehr festen Verankerung des Implantatkörpers 3 im Knochen 2 führt.

Die Oberflächenrauhigkeiten bzw. partikelförmigen Vorsprünge 8 werden bereits während des Herstellungsverfahrens auf dem Implantatkörper 3 angebracht. Da die Vorstufen des Implantats wesentlich leichter bearbeitet werden können als das fertige gesinterte Implantat, wird der Verfahrensschritt zur Erhöhung der Oberflächenrauhigkeit vor dem abschließenden Sintern durchgeführt. Das Herstellungsverfahren umfasst dabei mehrere Schritte. In einem ersten Schritt wird durch Pulverspritzgießen bindemittelversetzten Metall- oder Keramikpulver zunächst ein Grünling hergestellt. Im Anschluss daran wird das Bindemittel aus dem Grünling entfernt. Je nach Art des Bindemittels kann dies durch Erwärmen des Grünlings erfolgen, durch Behandlung des Grünlings mit organischen Lösemitteln oder auch durch Kontakt des Grünlings mit starken Säuren. Das nahezu bindemittelfreie Werkstück wird Braunling genannt. Dieser Braunling ist sehr fragil und sollte keinen größeren Belastungen ausgesetzt werden. Nach der Entfernung des Bindemittels wird der Braunling durch einen thermischen Prozess, das Sintern, verdichtet und erhält nahezu seine Endfestigkeit.

Die Erhöhung der Oberflächenrauhigkeit des Implantatkörpers 3 kann in verschiedenen Schritten des Herstellungsprozesses vorgenommen werden. Eine Möglichkeit ist, das Spritzgießwerkzeug, in dem der Grünling geformt wird, mit einer Struktur zu versehen, die dann auf der Oberfläche des Grünlings abgebildet wird. Dies führt normalerweise zu weichen Konturen der Vorsprünge. Eine andere Möglichkeit besteht darin, Material von der Oberfläche des Grünlings oder des Braunlings abzutragen. Dies kann beispielsweise durch einen materialabtragenden oder materialumformenden Schritt, wie Erodieren, Sand- oder Wasserstrahlen, Laserstrahlen, Ätzen, Prägen, Walzen oder Drücken erfolgen. Bei dieser Methode muss allerdings sehr vorsichtig vorgegangen werden, da der Grünling und vor allem der Braunling sehr fragil sind und keinen großen Belastungen ausgesetzt werden dürfen.

Weiterhin ist auch möglich, zusätzliche scharfkantige Partikel auf die Oberfläche des Grünlings, des
Braunlings oder einer anderen Vorstufe des Implantats aufzubringen. Dazu wird der Basiskörper mit einer Bindemittelschicht beschichtet, auf die im Anschluss die scharfkantigen Partikel aufgebracht werden. Das kann z.B. durch Aufsprühen, Aufrieseln oder durch Eintauchen des Körpers in die scharfkantigen Partikel erfolgen.

Andererseits ist es auch möglich, die scharfkantigen Partikel mit Bindemittel zu mischen und diese Mischung auf die Basiskörper aufzusprühen, aufzurieseln, aufzuwalzen oder die Basiskörper in die Mischung einzutauchen.

Werden der Grünling oder der Braunling so beschichtet, so werden die zusätzlich aufgebrachten scharfkantigen Partikel im Sinterschritt mit dem Grundkörper verbunden. Wird eine andere Vorstufe des Implantats auf diese Weise behandelt, so erfolgt ein weiterer Einbrennschritt, um eine Verbindung zwischen den aufgebrachten scharfkantigen Partikeln und dem Basiskörper zu erreichen. Die scharfkantigen Partikel werden dabei so ausgewählt, dass sie aus demselben
Material bestehen, wie der Implantatkörper.

Um beim Einsetzen des Implantatkörpers 3 in den Kieferknochen 2 den gewünschten Knochenabrieb zu erhalten, erfolgt die Beschichtung erfindungsgemäss mit scharfkantigen
Partikeln.

Das fertige Implantat weist dann eine sandpapierartige Struktur der Oberfläche auf.

## Patentansprüche

1. Verfahren zum Herstellen eines zum Einwachsen in einen Knochen bestimmten Implantats durch Pulverspritzgießen von bindemittelversetztem Metall- und/oder Keramikpulver, indem durch Spritzgießen zunächst ein Grünling, durch Entfernen des Bindemittels ein Braunling und durch mindestens einmaliges Sintern das Implantat hergestellt wird, **dadurch gekennzeichnet, dass** das Verfahren einen Schritt zur Erhöhung der Oberflächenrauhigkeit des Implantats umfasst, der vor dem abschließenden Sintern zur Herstellung des Implantats aus dem Braunling erfolgt, indem die Oberfläche im Grünling und/oder im Braunling und/oder in einer anderen Vorstufe des Implantats ohne mechanische Belastung des Grünlings und/oder des Braunlings und/oder der anderen Vorstufe des Implantats zumindest teilweise aufgeraut wird, wobei die Oberflächenrauhigkeit des Implantats durch Aufbringen scharfkantiger Partikel auf die Oberfläche des Grünlings und/oder des Braunlings und/oder der anderen Vorstufe des Implantats erhöht wird, die aufgebrachten Partikel aus dem-selben
Material bestehen wie das Implantat und die aufgebrachten Partikel eingebrannt werden.

2. Verfahren nach Anspruch 1, **dadurch gekennzeichnet, dass** der Grünling und/oder der Braunling und/oder die andere Vorstufe des Implantats mit Bindemittel beschichtet und die scharfkantigen Partikel auf die Bindemittelschicht aufgebracht werden.

3. Verfahren nach Anspruch 1, **dadurch gekennzeichnet, dass** die scharfkantigen Partikel mit Bindemittel
gemischt und auf den Grünling und/oder den Braunling und/oder die andere Vorstufe des Implantats aufgebracht werden.

4. Verfahren nach einem der Ansprüche 2 oder 3, **dadurch gekennzeichnet, dass** die scharfkantigen Partikel bzw. die scharfkantige-Partikel-Bindemittel-Mischung auf den bindemittelbeschichteten Grünling und/oder den bindemittelbeschichteten Braunling und/oder die andere, bindemittelbeschichtete Vorstufe des Implantats bzw. den Grünling und/oder den Braunling und/oder die andere Vorstufe des Implantats aufgesprüht werden.

5. Verfahren nach einem der Ansprüche 2 oder 3, **dadurch gekennzeichnet, dass** der Grünling und/oder der Braunling und/oder die andere Vorstufe des Implantats bzw. der bindemittelbeschichtete Grünling und/oder der bindemittelbeschichtete Braunling und/oder die andere, bindemittelbeschichtete Vorstufe des Implantats mit der scharfkantige-Partikel-Bindemittel-Mischung scharfkantigen Partikeln berieselt werden.

6. Verfahren nach einem der Ansprüche 2 oder 3, **dadurch gekennzeichnet, dass** der Grünling und/oder der Braunling und/oder die andere Vorstufe bzw. der bindemittelbeschichtete Grünling und/oder der bindemittelbeschichtete Braunling und/oder die andere, bindemittelbeschichtete Vorstufe des Implantats in die scharfkantige-Partikel-Bindemittel-Mischung bzw. die scharfkantigen Partikel eingetaucht werden.

7. Verfahren nach einem der Ansprüche 1 bis 6, **dadurch gekennzeichnet, dass** es sich bei dem Implantat um ein Schraubimplantat handelt und die Oberfläche des Implantats in dem Bereich aufgeraut wird, in dem beim Einsetzen des Implantats in den Knochen Reibkontakt zwischen dem Implantat und dem Knochen auftritt.

8. Implantat aus einem keramischen oder metallischen Sinterwerkstoff mit aufgerauter Oberfläche zum Einwachsen in einen Knochen, **dadurch gekennzeichnet, dass** die Oberfläche des Implantats zumindest teilweise partikelförmige Vorsprünge aufweist, und die partikelförmigen Vorsprünge durch auf die Oberfläche des Grünlings und/oder des Braunlings und/oder der anderen Vorstufe des Implantats aufgebrachte scharfkantige Partikel gebildet sind, wobei die aufgebrachten Partikel aus demselben Material bestehen wie das Implantat und die aufgebrachten Partikel eingebrannt sind.

9. Implantat nach Anspruch 8, **dadurch gekennzeichnet, dass** die aufgeraute Oberfläche des Implantats eine sandpapierähnliche Struktur hat.

## Claims

1. Method for producing an implant intended for ingrowth into a bone by powder injection molding binder-mixed metal and/or ceramic powder, by producing first a green body by injection molding, a brown body by removing the binder and the implant by performing sintering at least once, **characterized in that** the method comprises a step of increasing the surface roughness of the implant, which step is carried out prior to the final sintering for producing the implant from the brown body **in that** the surface in the green body and/or in the brown body and/or in another precursor of the implant is roughened at least partly without mechanical load on the green body and/or the brown body and/or the other precursor of the implant, wherein the surface roughness of the implant is increased by applying sharp-edged particles onto the surface of the green body and/or the brown body and/or the other precursor of the implant, the applied particles consist of the same material as the implant and the applied particles are burnt in.

2. Method according to claim 1, **characterized in that** the green body and/or the brown body and/or the other precursor of the implant are coated with binder and the sharp-edged particles are applied to the binder layer.

3. Method according to claim 1, **characterized in that** the sharp-edge particles are mixed with binder and applied to the green body and/or the brown body and/or the other precursor of the implant.

4. Method according to one of claims 2 or 3, **characterized in that** the sharp-edged particles or the sharp-edged particle/binder mixture, respectively, are sprayed onto the binder-coated green body and/or the binder-coated brown body and/or the other binder-coated precursor of the implant or the green body and/or the brown body and/or the other precursor of the implant, respectively.

5. Method according to one of claims 2 or 3, **characterized in that** the green body and/or the brown body and/or the other precursor of the implant or the binder-coated green body and/or the binder-coated brown body and/or the other binder-coated precursor of the implant, respectively, are sprinkled with the sharp-edged particle/binder mixture or the sharp-edged particles, respectively.

6. Method according to one of claims 2 or 3, **characterized in that** the green body and/or the brown body and/or the other precursor or the binder-coated green body and/or the binder-coated brown body and/or the other binder-coated precursor of the implant, respectively, are dipped into the sharp-edged particle/binder mixture or the sharp-edged particles, respectively.

7. Method according to one of claims 1 to 6, **characterized in that** the implant is a screw implant and the surface of the implant is roughened in the region in which upon insertion of the implant into the bone a frictional contact occurs between the implant and the bone.

8. Implant consisting of a ceramic or metallic sinter material with roughened surface for ingrowth into a bone, **characterized in that** the surface of the implant comprises at least partly particulate projections, and the particulate projections are formed by sharp-edged particles applied to the surface of the green body and/or the brown body and/or the other precursor of the implant, wherein the applied particles consist of the same material as the implant and the applied particles are burnt in.

9. Implant according to claim 8, **characterized in that** the roughened surface of the implant has a sandpaper-like structure.

## Revendications

1. Procédé de fabrication d'un implant destiné à s'intégrer dans un os par la croissance de celui-ci autour de l'implant, par moulage par injection de poudres à l'aide de poudres de métal et/ou de poudres de céramique mélangées à des liants, procédé d'après lequel on fabrique tout d'abord une pièce à "l'état vert" par moulage par injection, puis une pièce à "l'état brun" par une opération d'élimination des liants dite déliantage, et finalement l'implant par au moins une opération de frittage,
**caractérisé**
**en ce que** le procédé comprend une étape qui est destinée à augmenter la rugosité de surface de l'implant, et qui est effectuée avant le frittage final pour l'obtention de l'implant à partir de la pièce à "l'état brun", en rendant rugueuse au moins partiellement la surface sur la pièce à "l'état vert" et/ou la pièce à "l'état brun" et/ou la pièce dans un autre état préalable à l'implant, sans sollicitation mécanique de la pièce à "l'état vert" et/ou de la pièce à "l'état brun" et/ou de la pièce dans un autre état préalable à l'implant, la rugosité de surface de l'implant étant augmentée par l'application de particules à angles vifs sur la surface de la pièce à "l'état vert" et/ou de la pièce à "l'état brun" et/ou de la pièce dans un autre état préalable à l'implant, et en ce que les particules appliquées sont constituées du même matériau que l'implant et les particules appliquées sont fixées par cuisson.

2. Procédé selon la revendication 1, **caractérisé en ce que** l'on réalise un revêtement de liant sur la pièce à "l'état vert" et/ou la pièce à "l'état brun" et/ou la pièce dans un autre état préalable à l'implant, et l'on applique les particules à angles vifs sur la couche de liant.

3. Procédé selon la revendication 1, **caractérisé en ce que** l'on mélange les particules à angles vifs à un liant et on les applique sur la pièce à "l'état vert" et/ou la pièce à "l'état brun" et/ou la pièce dans un autre état préalable à l'implant.

4. Procédé selon l'une des revendications 2 ou 3, **caractérisé en ce que** l'on pulvérise les particules à angles vifs ou respectivement le mélange des particules à angles vifs avec un liant, sur la pièce à "l'état vert" revêtue de liant et/ou la pièce à "l'état brun" revêtue de liant et/ou la pièce dans un autre état préalable à l'implant revêtue de liant, ou bien respectivement sur la pièce à "l'état vert" et/ou la pièce à "l'état brun" et/ou la pièce dans un autre état préalable à l'implant.

5. Procédé selon l'une des revendications 2 ou 3, **caractérisé en ce que** l'on arrose la pièce à "l'état vert" et/ou la pièce à "l'état brun" et/ou la pièce dans un autre état préalable à l'implant, ou bien respectivement la pièce à "l'état vert" revêtue de liant et/ou la pièce à "l'état brun" revêtue de liant et/ou la pièce dans un autre état préalable à l'implant revêtue de liant, avec le mélange de particules à angles vifs et de liant ou respectivement avec les particules à angles vifs.

6. Procédé selon l'une des revendications 2 ou 3, **caractérisé en ce que** l'on plonge la pièce à "l'état vert" et/ou la pièce à "l'état brun" et/ou la pièce dans un autre état préalable à l'implant ou bien respectivement la pièce à "l'état vert" revêtue de liant et/ou la pièce à "l'état brun" revêtue de liant et/ou la pièce dans un autre état préalable à l'implant revêtue de liant, dans le mélange de particules à angles vifs et de liant ou respectivement dans les particules à angles vifs.

7. Procédé selon l'une des revendications 1 à 6, **caractérisé en ce que** concernant l'implant, il s'agit d'un implant à visser, et la surface de l'implant est rendue rugueuse dans la zone dans laquelle lors de la mise en place de l'implant dans l'os se produit un contact de friction entre l'implant et l'os.

8. Implant en un matériau de frittage céramique ou métallique avec une surface rendue rugueuse, qui est destiné à s'intégrer dans un os par la croissance de celui-ci autour de l'implant, **caractérisé en ce que** la surface de l'implant présente au moins en partie des protubérances sous forme de particules, et les protubérances sous forme de particules sont formées par des particules à angles vifs appliquées sur la surface de la pièce à "l'état vert" et/ou de la pièce à "l'état brun" et/ou de la pièce dans un autre état préalable à l'implant, et **en ce que** les particules appliquées sont constituées du même matériau que l'implant et les particules appliquées sont fixées par cuisson.

9. Implant selon la revendication 8, **caractérisé en ce que** la surface de l'implant rendue rugueuse présente une structure similaire à du papier de verre.
